# EUROPEAN PATENT SPECIFICATION

(11) **EP 3 920 669 B1**
(45) Date of publication and mention of the grant of the patent: **06.03.2024**
(21) Application number: 21177620.8
(22) Date of filing: 03.06.2021
(51) Int. Cl.: H05B 47/19, H02M 1/00, H02M 1/08, H02M 1/32, H02M 1/42, H02M 3/155, H02M 3/156, H02M 3/158, H02M 3/335, H02M 5/293, H02M 7/06

(54) **LIGHTING CONTROLS**
BELEUCHTUNGSSTEUERUNGEN
COMMANDES D'ÉCLAIRAGE

(30) Priority: 03.06.2020 GB 202008344
(43) Date of publication of application: 08.12.2021
(73) Proprietor: ML Accessories Ltd, Bedfordshire LU5 4LT (GB)
(72) Inventor: AYDEMIR, Tolga, St. Ives PE27 4LG (GB)
(74) Representative: Dehns

(56) References cited:
- WO-A1-2020/004963
- US-A1- 2016 227 628
- US-A1- 2018 092 313

## Description

### Technical Field

The present invention relates to lighting controls including light switches and dimmers, and in particular to controls with wireless communication functionality suitable for home automation applications.

### Background

A growing area of interest in recent years has been home automation or 'smart homes' in which various domestic devices and appliances are connected to a network, and in some examples to the Internet, so as to provide remote control. Some devices included in home automation are lighting, climate (i.e. heating and cooling), home appliances, entertainment systems, and security systems. Similar systems may also be applied to non-domestic environments such as commercial and office buildings.

Of particular interest is the control of lighting systems. There are a number of systems, known in the art *per se,* that provide control over the lighting. Such control may allow switching the lights on or off, and may provide dimming functionality, i.e. to provide control over the brightness of the lighting when switched on. Some systems provide the light bulbs with communications hardware (often referred to as 'smart light bulbs' or simply 'smart bulbs'), where the light switch is typically left on and the bulb itself is switched on and off directly.

In other systems, the point of control is at the lighting control or light switch (referred to as e.g. a 'smart light switch' 'smart switch', `smart lighting control', or 'smart control'), which allows conventional light bulbs to be switched on and off remotely. Of course, some systems combine both of these approaches, where the bulbs can be controlled individually, but the lighting circuits can also be controlled by the wireless light switch. Those skilled in the art will appreciate that the term `lighting control' includes light switches and dimmers having either simple on/off functionality and/or the ability to dim the lighting load (generally referred to as `dimmer switches', 'dimming switches', `lighting dimmers', or similar).

Many smart lighting products on the market use a wireless communication technology such as ZigBee^{®} or other proprietary wireless technology. Generally, such systems require a hub or gateway to connect to the Internet. Those skilled in the art will appreciate that this hub or gateway is a standalone hardware device that communicates with the smart home devices such as a wireless light switch, and generally acts as an interface between the smart home devices and a wireless access point or home router.

It has been appreciated that it would be beneficial to provide the light switch with Wi-Fi^{®} communications hardware so as to allow connection to an existing home router or access point, potentially removing the need for a hub or gateway.

However, devices such as a smart light switch which require a fast response to an external command often cannot be particularly low power which generally rules out energy harvesting from the environment and batteries may not be suitable either. This is particularly the case for Wi-Fi^{®} which has not been designed for very low power applications. Therefore, Wi-Fi^{®}-based smart switches must be powered from the mains. In the UK, however, the fittings for most light switches only have a live connection. There is no neutral available at the switch only at the light, as the switching behaviour is achieved by making or breaking the live connection only. This creates an issue for powering the wireless electronics.

US 2018/092313 A1 discloses a method and apparatus for extracting power in a switch location, and in a load location for use in a pre-existing infrastructure of switching AC power to a lamp (or other load) via a two terminal switch device.

US2016/227628 A1 describes a multi-mode control device using leakage current to ground as a power source for a low-power mode.

### Summary of the Invention

When viewed from a first aspect, the present invention provides a lighting control for selectively supplying an AC input voltage to an external lighting load, said lighting control comprising:
a controllable switching element arranged between a mains live input terminal and a mains live output terminal, said controllable switching element arranged to operate in an on state in which a connection path between the mains live input terminal and the mains live output terminal is enabled, and an off state in which the connection path is disabled;
a switch mode power supply connected between the mains live input terminal and a mains earth terminal, said switch mode power supply being arranged to selectively pass a leakage current between the mains live input terminal and the mains earth terminal to generate a DC output voltage; and
a wireless controller arranged to operate the controllable switching element in response to a received control signal, wherein the DC output voltage generated by the switch mode power supply is supplied to the wireless controller;
wherein the lighting control is characterised by:
   a current monitor arranged to measure the leakage current and to generate a feedback signal having a first value when the leakage current is below a predetermined threshold value and a second value when the leakage current is not below the predetermined threshold value, said current monitor being arranged to supply said feedback signal to a feedback input of the switch mode power supply;
   wherein the switch mode power supply is arranged to enable the leakage current between the mains live input terminal and the mains earth terminal when the feedback signal has its first value, and to disable the leakage current between the mains live input terminal and the mains earth terminal when the feedback signal has its second value.

This first aspect of the invention extends to a method of operating a lighting control to selectively supply an AC input voltage to an external lighting load, the lighting control comprising:
a controllable switching element arranged between a mains live input terminal and a mains live output terminal, said switching element being operable in an on state in which a connection path between the mains live input terminal and the mains live output terminal is enabled, and an off state in which the connection path is disabled;
wherein the method comprises:
   selectively passing a leakage current between the mains live input terminal and the mains earth terminal; and
   generating a DC output voltage from said leakage current;
   wherein the method is characterised by:
      measuring the leakage current between the mains live input terminal and the mains earth terminal and generating a feedback signal having a first value when the leakage current is below a predetermined threshold value and a second value when the leakage current is not below the predetermined threshold value;
      enabling the leakage current between the mains live input terminal and the mains earth terminal when the feedback signal has its first value; and
      disabling the leakage current when the feedback signal has its second value.

Thus it will be appreciated by those skilled in the art that embodiments of the present invention provide an improved lighting control, i.e. a smart light switch or dimmer, that intentionally leaks current from the live terminal to the mains earth terminal, and derives a DC voltage from this leaked current that can be used to power the controller. Thus the wireless transceiver may be powered by this `earth leakage current', thereby advantageously allowing the use of a wireless transceiver (e.g. a Wi-Fi^{®} transceiver) *in situ* within the light switch without a mains neutral connection.

It will be appreciated that the mains live terminal is a terminal of the lighting control that, when installed, receives the AC input voltage, i.e. from the mains power supply or 'grid'. The earth terminal is a terminal of the lighting control that, when installed, is connected to electrical earth, i.e. to ground.

The current monitor acts to operate the switch mode power supply in a closed 'current control loop', which keeps the leaked current below the predetermined threshold by making use of the feedback input of the switch mode power supply. Advantageously, this avoids the need for a standalone current limiter such as a linear regulator, which may be less energy efficient than making use of the feedback input.

Keeping the leakage current below the threshold may be important for safety reasons, as well as to meet regulatory requirements. The predetermined threshold value may be selected in accordance with design and regulatory requirements, e.g. in accordance with the IEC/UL950, I EC60950, IEC/UL60335, and IEC 61010 standards, which specify different limits for different applications. For example, a lighting control in accordance with embodiments of the present invention may fall under a 'Class 1 type', which allows a maximum leakage current of 3.5 mA. It will of course be appreciated that other maximum currents may be chosen in accordance with appropriate standards or design constraints. In some embodiments, the predetermined threshold is equal to or less than 10 mA, optionally equal to or less than 5 mA, further optionally equal to or less than 3.5 mA, and preferably the predetermined threshold is 3.5 mA. The use of 3.5 mA as the predetermined threshold is particularly advantageous for implementing Class 1 type devices, however in some embodiments the predetermined threshold may be set to less than the regulatory limit by a suitable degree, i.e. an appropriate value for the predetermined threshold may be selected as required.

The switch mode power supply, in some embodiments, comprises a flyback converter. Those skilled in the art will appreciate that a flyback converter typically comprises a first and second mutual inductors (generally a transformer) and a switch, wherein operation of the switch selectively passes current through the flyback converter, wherein the converter stores energy when current passes through it and releases the energy when the power is removed. In some such embodiments, the flyback converter is arranged to run in a discontinuous mode.

In an alternative set of embodiments, the switch mode power supply may comprise a buck-boost converter. Those skilled in the art will appreciate that a buck-boost converter is an alternative topology to the flyback converter, in which a single inductor is used instead of a pair of mutual inductors. Current is intermittently passed through the inductor using an intermittently-enabled switch, where the switch is usually controlled by an alternating voltage having a particular duty cycle. Typically this signal is a pulse width modulated (PWM) signal. The output voltage of the buck-boost converter generally depends on the duty cycle. Generally, a diode is provided in series or in parallel with the inductor, depending on whether buck, boost, or buck-boost functionality is required, according to a topology known in the art *per se.*

In a further alternative set of embodiments, the switch mode power supply may comprise a push-pull converter. Those skilled in the art will appreciate that a push-pull converter includes a transformer supplied with current from the input via a pair of transistors in a symmetrical push-pull circuit topology, known in the art *per se.* The transistors are alternately switched on and off, which causes a periodic switching of the current in the transformer from one polarity to the other, resulting in current draw during both halves of any given switching cycle, unlike in a buck-boost converter which draws current only during half of the switching cycle, where energy in the other half is supplied by the inductor (i.e. using the energy stored by the inductor).

In a yet further alternative set of embodiments, the switch mode power supply may comprise a single-ended primary-inductor converter (SEPIC). Those skilled in the art will appreciate that a SEPIC converter generally comprises a boost converter followed by an inverted buck-boost converter. A SEPIC converter may be seen as being similar to a traditional buck-boost converter, but may advantageously have a non-inverted output (i.e. the output of the converter has the same voltage polarity as the input). A SEPIC converter may also advantageously be able to completely shut down, i.e. when the switch is sufficiently turned off, the output drops to 0 V.

As outlined above, the switch mode power supply is controlled via its feedback input. The switch mode power supply may comprise a feedback input for a voltage control loop, where the same feedback input may be used for both the voltage control loop and the current control loop. The further feedback signal could be provided to a further feedback input, however in some embodiments, a further feedback signal dependent on an output voltage of the switch mode supply may be provided to the feedback input. The Applicant has appreciated that the use of the same feedback input for both the current and voltage control loops is particularly beneficial, as it allows the single feedback input that may typically be found on conventional switch mode power supply circuits to be used for both purposes, without requiring additional hardware.

There are a number of current monitor circuits, known in the art *per se,* that could be used to generate the feedback signal dependent on the leakage current. However, in some embodiments, the current monitor comprises:
a first conductor rail connected to a ground output of the switch mode power supply;
a second conductor rail connected to the mains earth terminal;
a shunt resistor connected between the first and second conductor rails;
a potential divider comprising first and second potential divider resistors connected between the first and second conductor rails, wherein a node is provided between the first and second potential divider resistors;
a reference diode having an anode thereof connected to the second conductor rail, and a cathode thereof connected to the first conductor rail, said reference diode further comprising a control terminal thereof connected to the node of the potential divider, wherein a breakdown voltage of the reference diode depends on a voltage at the node;
wherein a voltage at the cathode of the reference diode is used to generate the feedback signal.

Such an arrangement results in a lower power current monitor in which the voltage drop across the shunt resistor is dependent on the leakage current being sinked from the ground output of the switch mode power supply to the mains ground terminal. The voltage drop across this shunt resistor is measured by the potential divider, where the voltage at the potential divider node is proportional to the voltage drop across the shunt resistor. The resistance values of the first and second potential divider resistors may be selected such that the reference diode, which may comprise a zener diode, undergoes breakdown when the leakage current reaches the threshold value.

It has been appreciated that, in general, it may be preferable to couple the output of the current monitor (e.g. the voltage at the cathode of the reference diode in the set of embodiments described above) to the feedback input of the switch mode power supply indirectly in order to isolate these from one another, and to allow for different voltage levels to be used at both points in the circuit (e.g. at the cathode and the feedback input). Thus, in some embodiments, the lighting control comprises a coupler arranged between an output of the current monitor and the feedback input of the switch mode power supply. The output of the current monitor may, in a set of embodiments as outlined above, comprise the cathode of the reference diode.

This coupler may, in some embodiments, comprise an optocoupler (sometimes referred to as an photocoupler, opto-isolator, or optical isolator). Those skilled in the art will appreciate that an optocoupler generally comprises a light-emitting diode (LED) and a phototransistor that are electrically isolated from one another, where an electrical current passed through the LED causes the LED to emit light, which is coupled into the phototransistor, which converts the light back to an electrical current. In some embodiments, the optocoupler is arranged such that:
an anode of the LED is connected to the first conductor rail;
a cathode of the LED is connected to the cathode of the reference diode;
a drain terminal of the phototransistor is connected to a supply rail; and
a source terminal of the phototransistor is connected to the feedback input of the switch mode power supply.

In a set of embodiments, a resistor may be connected between the first conductor rail and the cathode of the reference diode. In a set of embodiments comprising the optocoupler, this resistor may therefore be connected between the anode and cathode of the LED.

As outlined above, the mains live terminal is arranged such that, when the lighting control is installed, it receives an AC input voltage. In order to supply the DC output voltage to the wireless controller, it is generally necessary to convert the AC input voltage to a DC voltage. This may be achieved by the switch mode power supply, however in some embodiments, the lighting control comprises a rectifier connected between the mains live and earth terminals and the switch mode power supply. This rectifier may, at least in some embodiments, comprise a full-wave bridge rectifier.

In some embodiments, the lighting control comprises a protection circuit including a fusible resistor. This fusible resistor may advantageously provide for improvements in the power factor of the power supply. In a particular set of embodiments, the fusible resistor is connected between the mains live terminal and the rectifier where provided.

In some embodiments, the lighting control comprises a filter circuit. Those skilled in the art will appreciate that a filter circuit selectively substantially allows only signals having a frequency within a particular passband to pass through the filter, while signals having frequencies outside of the passband are attenuated. Ideally, a filter would have an exact cut-off frequency, however in general the filter has a 'roll-off' in which, frequencies beyond a particular corner frequency are increasingly attenuated, e.g. in accordance with an exponential function. Such an arrangement may be particularly advantageous for removing noise from the mains supply.

In a particular set of embodiments, the lighting control is arranged such that the AC input voltage is first passed through a protection circuit, then through a rectification circuit, and then a filter circuit before being supplied to the current monitor and switch mode power supply.

While the smart switch could drive a single lighting load, in some embodiments the lighting control comprises a plurality of mains live output terminals each arranged to supply the AC input voltage to a respective external lighting load. In a set of such embodiments, the lighting control comprises a plurality of controllable switching elements, each arranged between the mains live input terminal and a respective one of the plurality of mains live output terminals, wherein each switching element is operable in a respective on state in which a connection path between the mains live input terminal and the respective one of the plurality of mains live output terminals is enabled, and an off state in which said connection path is disabled. Thus, in accordance with such embodiments, the lighting control may be arranged to drive a 'multi-gang' lighting load, and one or more (and potentially all) of the external lighting loads may be controlled individually.

There are a number of controllable switching elements that may be used to implement the lighting control in accordance with embodiments of the present invention. However, in some embodiments, the controllable switching element comprises a transistor, and optionally comprises a metal-oxide-semiconductor field-effect-transistor (MOSFET). Generally, switching of a MOSFET is controlled by applying an appropriate voltage to the gate terminal of the MOSFET, thereby enabling or disabling current flow between the drain and source terminals of the MOSFET. The controller may apply such a voltage to the gate terminal directly (e.g. the controller may comprise a MOSFET driver), however in a set of such embodiments, the controllable switching element comprises a MOSFET driver.

In some embodiments, the smart light comprises a zero crossing detector arranged to supply a detection signal indicative of when a magnitude of the AC input voltage crosses a zero level. In some embodiments, the controller uses the detection signal to drive the controllable switching element(s) in synchrony with the zero crossings of the AC input voltage. This may be particularly beneficial when the lighting control has dimming functionality, where the brightness of the external lighting load is controlled by varying the duty cycle of the switching of the corresponding controllable switching element. One technique for this, known in the art *per se,* is `trailing edge dimming'.

The wireless controller may be arranged to receive the control signal over any suitable wireless interface, however in some embodiments the control signal is received over a Wi-Fi^{®} interface. Thus in some embodiments, the wireless controller comprises a Wi-Fi^{®} transceiver.

### Brief Description of Drawings

Certain embodiments of the invention will now be described, by way of example only, with reference to the accompanying drawings in which:
Fig. 1 is a schematic diagram of a lighting installation including a smart light switch in accordance with an embodiment of the present invention;
Fig. 2 is a block diagram of the smart light switch of Fig. 1;
Fig. 3 is a block diagram of the earth leakage power supply for use in the smart light switch of Fig. 2; and
Fig. 4 is a circuit diagram of the earth leakage power supply of Fig. 3.

### Detailed Description

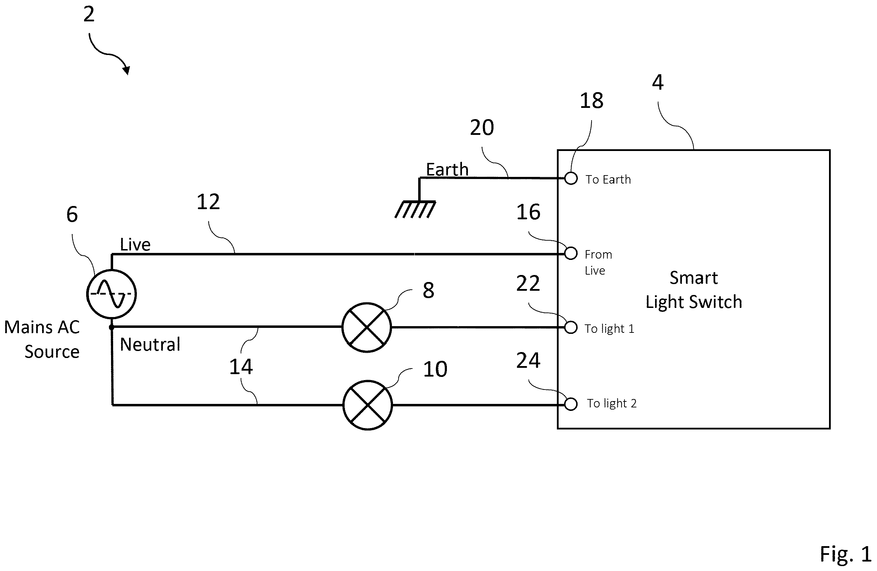

Fig. 1 is a schematic diagram of a lighting installation 2 which makes use of a smart light switch 4, i.e. a lighting control, in accordance with an embodiment of the present invention. The smart light switch 4 is connected to a mains AC source 6, which supplies an AC input voltage. The smart light switch 4 is arranged to selectively pass this AC input voltage to external lighting loads 8, 10.

The mains source 6 has a mains live connection 12, and a neutral connection 14. The mains live connection 12 is connected to a mains live input terminal 16 of the smart light switch 4. The smart light switch 4 also has a mains earth terminal 18, which is connected to earth 20, i.e. to ground, and a pair of mains live output terminals 22, 24 which are each connected to one of the external lighting loads 8, 10 respectively. It will be appreciated that the lighting installation 2 could instead be connected to a single external lighting load, or any other number of external lighting loads, as appropriate.

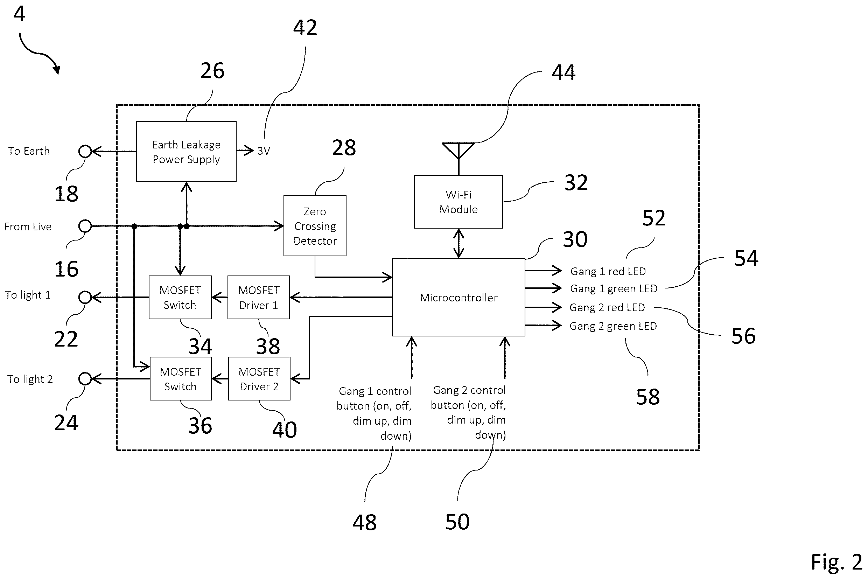

Fig. 2 is a block diagram of the smart light switch 4 of Fig. 1, in which the individual components of the smart light switch 4 can be seen in further detail. The smart light switch 4 comprises: an earth leakage power supply 26; a zero crossing detector 28; a microcontroller 30; a Wi-Fi^{®} module 32; a pair of MOSFET switches 34, 36; and corresponding MOSFET drivers 38, 40. The MOSFET switches 34, 36 and associated drivers 38, 40 collectively form controllable switching elements, for selectively passing current to the lighting loads 8, 10.

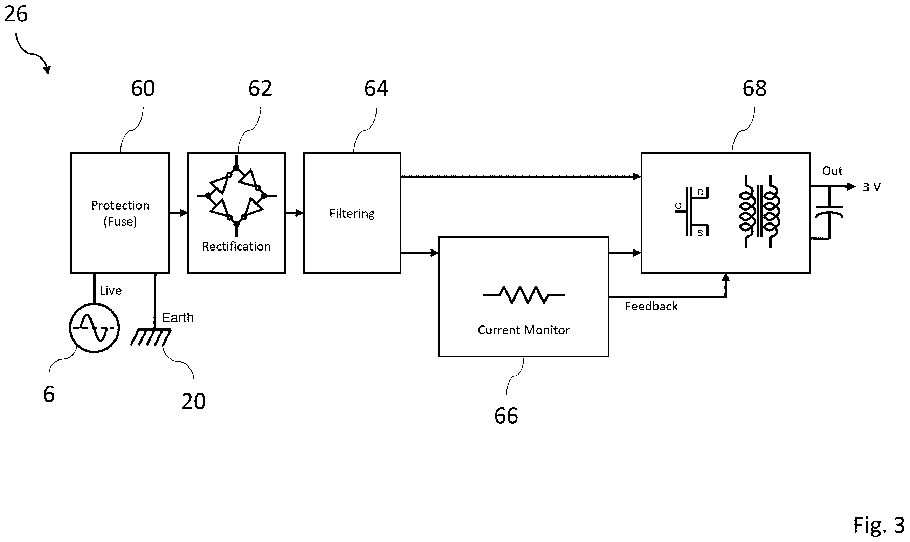

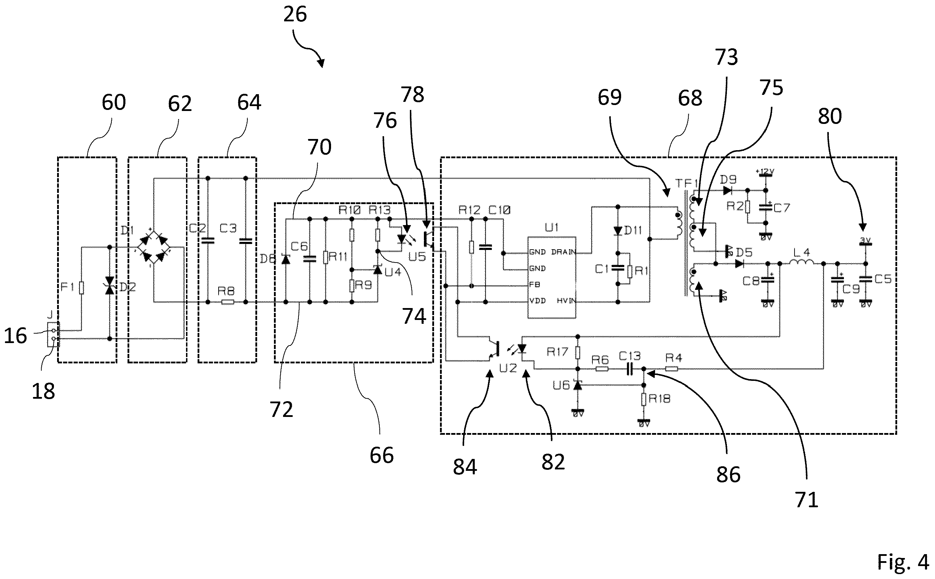

The AC source 6 supplies alternating current to the earth leakage power supply 26, zero crossing detector 28, and MOSFET switches 34, 36. The earth leakage power supply 26 is described in further detail with reference to Figs. 3 and 4 below, and is arranged to leak a small amount of leakage current to the mains earth terminal 18, and to use this leakage current to generate a 3V DC output voltage 42, which in turn is supplied to the Wi-Fi^{®} module 32. The amount of current leaked by the earth leakage power supply 26 is kept below a threshold limit, which in this particular embodiment is set to 3.5mA.

The 3V DC output voltage 42 is also supplied to the zero crossing detector 28 and the microcontroller 30. The MOSFET drivers 38, 40 are, in this particular embodiment, arranged to use a separate output voltage - in this example a 12V DC output voltage - also produced by the earth leakage power supply 26 as outlined in further detail below.

By allowing a small amount of current to leak from the live phase to earth, the earth leakage power supply 26 generates sufficient power to allow for proper operation of the Wi-Fi^{®} module 32, such that it can receive control signals via an antenna 44, where these control signals instruct the smart light switch 4 to operate the MOSFETs 34, 36 and drivers 38, 40 so as to selectively supply the mains AC voltage to the lighting loads 8, 10.

The control signals are used by the microcontroller 30 to drive the MOSFETs 34, 36 and drivers 38, 40 so as to turn the lights 8, 10 on or off, and/or can set the dimming level of the lights, as required.

In order to provide dimming of the lights 8, 10, the zero crossing detector 28 supplies a detection signal 46 indicative of when a magnitude of the AC input voltage crosses zero. The microcontroller 30 uses the detection signal 46 to drive the MOSFETs 34, 36 and drivers 38, 40 in synchrony with the zero crossings of the AC input voltage. The microcontroller 30 generates and supplies suitable PWM signals that are used to switch the MOSFETs 34, 36 via the associated drivers 38, 40. In order to set the dimming level of each of the lights 8, 10, the duty cycle of corresponding PWM signals is set so as to drive the brightness of the lights 8, 10 to the appropriate level.

The microcontroller 30 also takes manual inputs from a pair of mechanical buttons 48, 50, which provide for manual actuation of the smart light switch 4, where one button 48 controls one light 8, and the other button 50 controls the other light 10. These buttons 48, 50 can also be used to turn the lights 8, 10 on and off and to control the dimming (i.e. increasing and decreasing the brightness) of the lights 8, 10.

Additionally, the microcontroller 30 is connected to a pair of LEDs 52, 54, 56, 58 for each lighting gang, where these LEDs 52, 54, 56, 58 correspond to the operational status of the corresponding light 8, 10. A red LED 52 and a green LED 54 indicate whether the first light 8 is off or on respectively; and a red LED 56 and a green LED 58 indicate whether the second light 10 is off or on respectively.

Fig. 3 is a block diagram of the earth leakage power supply 26 used in the smart light switch 4 of Fig. 2, where the earth leakage power supply 26 can be seen in further detail in the circuit diagram of Fig. 4. The earth leakage power supply 26 comprises a protection block 60, a rectifier block 62, a filter block 64, a current monitor 66, and a switch mode power supply block 68. It will be appreciated that these 'blocks' are logical divisions of the different portions of the earth leakage power supply 26 for ease of reference, however in practice these may all form part of the same physical device, e.g. on a single printed circuit board (PCB), or may be divided across multiple PCBs within the smart light switch 4 as appropriate.

The protection block 60 includes a fusible resistor F1 and a voltage clamping transient-voltage-suppression (TVS) diode D2. This fusible resistor F1 has two main functions, firstly to protect against single fault failure (e.g. due to short circuits), and to increase the power factor compared with use of a standard fuse. This may help to maximise the power that can be harvested while keeping the amount of current limit leaked into earth low.

The rectifier block 62 uses a full-wave bridge rectifier D1 to convert the alternating input voltage to a DC voltage, which is subsequently passed through the filter block 64. The filter block 64 is used for preventing switching noise produced by the switch mode power supply from coupling into the live phase and earth connections. This filter block 64 aids in adhering to electromagnetic compliance requirements. Through a combination of capacitors C2, C3 and a resistor R8, the resistor-capacitor (RC) network allows only signals within a particular passband (as set by the resistance of R8 and capacitance of C2 and C3) to pass through the filter block 64, and substantially attenuates other signals.

The switch mode power supply 68 uses a switcher circuit U1, which in this particular embodiment is an integrated circuit (IC). The switcher U1 has a number of pins: a VDD pin for receiving a supply voltage; a pair of ground pins GND; a drain terminal DRAIN and high voltage input pin HVIN for connection which provide the output of the switcher U1; and a feedback pin FB.

The ground pins GND of the switcher circuit U1 are connected to the earth terminal 18 via the current monitor 66, filter block 64, rectifier block 62, and protection block 60. In particular, the ground pins GND are connected to the first conductor rail 70 of the current monitor 66, as described in further detail below. A resistor R12 is connected between the ground pins GND and the feedback pin FB. A capacitor C10 is connected between the ground pins GND and the supply pin VDD.

The switch mode power supply block 68 is arranged as a flyback converter arranged to run in discontinuous mode. It will be appreciated that while a flyback converter topology is shown in Fig. 4, the switch mode power supply 68 could also use e.g. a buck-boost or a SEPIC converter topology.

A flyback diode D11 is connected in series with a parallel combination of a capacitor C1 and resistor R1, and this series combination are connected between the DRAIN and HVIN pins of the switcher circuit U1. A primary winding of a transformer TF1 is also connected across the DRAIN and HVIN pins of the switcher circuit U1. This transformer TF1 is provided with three secondary windings 71, 73, 75, which supply two output voltages.

One secondary winding 71 of the transformer TF1 provides a 3 V output voltage at an output terminal 80 connected to the secondary winding via a forward-bias diode D5 connected in series with an inductor L4. A pair of capacitors C8, C9 are connected between respective terminals of the inductor L4 and 0 V. A further capacitor C5 is connected between the output terminal 80 and 0 V.

The other output voltage supplied by a further secondary winding 73 of the transformer TF1 provides a 12 V output voltage, where this 12 V voltage is used to supply the MOSFET drivers 38, 40.

The switcher circuit U1 intermittently passes an alternating current through the primary winding 69 of the transformer TF1, which induces an alternating current in the secondary windings 71, 73, 75. This induced alternating current is rectified by the diode D5, which acts as a half-wave rectifier. The inductor L4 and capacitors C5, C8, C9 act as a filter to smooth the output from the diode D5, resulting in the 3 V DC output voltage, suitable for supply to the Wi-Fi^{®} module 32 and any other associated circuitry.

Similarly, the induced alternating current through the secondary winding 73 for the 12 V output is rectified by a further diode D9, and the resulting rectified 12 V voltage is passed through a filter constructed from a parallel arrangement of a resistor R2 and capacitor C7. This results in the 12 V DC supply used to power the MOSFET drivers 38, 40 as outlined above.

The switch mode power supply 68 drives the voltage at the output terminal 80 to the 3 V level using closed loop feedback. This feedback is provided by a feedback circuit coupled to the switcher circuit U1 via an optocoupler U2 comprising an LED 82 and phototransistor 84.

The anode of the LED 82 is connected to the first terminal of the inductor L4 (i.e. on the transformer side), while the cathode of the LED 82 is connected to the second terminal of the inductor L4 (i.e. on the output terminal side) via a first resistor R6, capacitor C13, and a second resistor R4. A third resistor R17 is connected between the anode and cathode of the LED 82. A variable zener diode U6 is arranged such that its anode is connected to 0 V, and its cathode is connected to the cathode of the LED 82. A resistor R18 is connected such that one terminal of the resistor R18 is connected at a node 86 between the capacitor C13 and second resistor R4, and the other terminal of the resistor R18 is connected to 0 V. The node 86 is also connected to a control terminal of the variable zener diode U6.

When the voltage at the output terminal 80 reaches its intended value, i.e. 3 V, current is passed through the LED 82, which causes it to emit light. This light is received by the phototransistor 84, which allows current to pass between its drain and source terminals. This pulls the feedback pin FB up to the supply voltage VDD, which in turn instructs the switcher circuit U1 to stop switching. When the voltage at the output terminal 80 drops, the current in the voltage feedback loop drops, causing the LED 82 to cease emitting light, which results in the switcher circuit resuming its switching behaviour, thus driving the output voltage back toward 3 V.

In some arrangements, the efficiency of the earth leakage power supply can be improved by reducing the maximum allowed duty cycle of the flyback converter running in discontinuous mode. By reducing the maximum permissible duty cycle such that the converter stays in discontinuous mode at maximum permissible output power and the voltage feedback circuit is not active (i.e. that the voltage feedback zener diode U6 is not conducting), and the maximum drawn current stays below the set current limit of the current monitor, then the input of the flyback power supply behaves like a resistive load. This may increase the power factor, allowing a higher power draw within the permissible current draw limit.

The current monitor 66 comprises a first conductor rail 70 connected to the ground output GND of the switcher circuit U1 within switch mode power supply 68 - as explained in further detail below. A second conductor rail 72 is connected to the mains earth terminal 18 via filter block 64, rectifier block 62, and protection block 60. A shunt resistor R11 is connected across these conductor rails 70, 72, and is arranged such that the voltage across the shunt resistor R11 is proportional to the current from the ground output GND of the switcher circuit U1, i.e. it is proportional to the earth leakage current.

The current monitor 66 measures the earth leakage current via the shunt resistor R11 using a potential divider constructed from R9 and R10. A capacitor C6 is also connected across these conductor rails 70, 72, which filters out high frequency components (i.e. fluctuations) in the earth leakage current.

A zener diode U4 and series resistor R13 are connected in parallel with the shunt resistor R11 and potential divider R9, R10. The zener diode U4 is connected such that its cathode is connected to a first conductor rail 70 via the series resistor R13, and its anode is connected to a second conductor rail 72. A protective diode D6 is also connected between the first and second conductor rails 70, 72, such that its cathode is connected to the first conductor rail 70 and its anode is connected to the second conductor rail 72. This protective diode D6 is a zener diode that protects the current monitor under single fault conditions, e.g. if the drain pin of the switcher circuit U1 is shorted to its ground GND pins.

A node 74 between the potential divider resistors R9, R10 is connected to a control terminal of the zener diode U4, such that the voltage at the node 74 varies the breakdown voltage of the zener diode U4. The resistors R9, R10 are selected such that when the current leaked to ground 20 by the earth leakage power supply 26, the zener diode U4 undergoes breakdown. In this particular embodiment, the threshold current is set to 3.5mA RMS (root-mean-square), though different threshold voltages may be achieved as desired through appropriate selection of the components, as will be readily understood by those skilled in the art.

When the current reaches the threshold value - which sets a current limit when there is high power demand from the 3V rail - the current monitor 66 sends a signal to the feedback input of U1.

This is implemented using a photocoupler U5, which provides an interface between the current monitor 66 and the switch mode power supply 68. The photocoupler is constructed from an LED U5 connected across the resistor R13, such that the anode of the LED 76 is connected to the first conductor rail 70 and the cathode of the LED 76 is connected to the cathode of the zener diode U4. Thus when the zener diode U4 undergoes breakdown (i.e. when the leakage current reaches the threshold), current flows through the LED 76 causing it to emit light.

The resulting light emitted by the LED 76 is absorbed by a phototransistor 78, which varies its conductance based on the received light. Thus when the earth leakage current reaches the threshold value, current is passed through the LED 76 of the photocoupler U5, causing the phototransistor 78 to start to conduct, which and pulls the feedback pin FB of U1 to the supply voltage level VDD.

While the FB pin is pulled towards to the voltage level of the VDD pin, U1 stops switching. This causes the current flowing through R13 to decline below the set current limit. This stops U4 and U5 conducting and causes the voltage on the FB pin relative to the ground connection of U1 (pin 1 and 2) to drop. When this relative voltage drops, the U1 starts switching again. This creates a feedback loop so that the current flowing through R11 regulates at set current limit value (below 3.5mA RMS). This current almost equals the current (omitting current flowing through U4 and R9 as they are relatively small) flowing into the earth connection hence this solution prevents earth leakage current exceeding the safe limit value.

This arrangement is particularly beneficial because the earth leakage current is limited efficiently without requiring linear regulation, which is generally less efficient.

It can be seen that the same feedback pin FB that is typically used by conventional switcher circuits for a voltage control feedback loop is advantageously repurposed for the current control feedback loop. This means that conventional switcher circuits (that typically have a single feedback pin FB) can be used, without requiring proprietary hardware. The switcher circuit U1 is simply turned off whenever either of the conditions that necessitate it being disabled is true, i.e. if the output voltage is sufficient, or if the leakage current is too high.

Thus it will be appreciated by those skilled in the art that embodiments of the present invention provides a smart light switch in which the wireless (e.g. Wi-Fi^{®}) communication module can be powered by leaking a small amount of current from the mains phase to earth, while keeping the magnitude of that current below a threshold amount for safety and regulatory control.

Those skilled in the art will appreciate that the specific embodiments described herein are merely exemplary and that many variants within the scope of the invention are envisaged.

## Claims

1. A lighting control (4) for selectively supplying an AC input voltage (6) to an external lighting load (8, 10), said lighting control (4) comprising:
a controllable switching element (34, 36) arranged between a mains live input terminal (16) and a mains live output terminal (22, 24), said controllable switching element (34, 36) arranged to operate in an on state in which a connection path between the mains live input terminal (16) and the mains live output terminal (22, 24) is enabled, and an off state in which the connection path is disabled;
a switch mode power supply (68) connected between the mains live input terminal (16) and a mains earth terminal (18), said switch mode power supply (68) being arranged to selectively pass a leakage current between the mains live input terminal (16) and the mains earth terminal (18) to generate a DC output voltage (42); and
a wireless controller (32) arranged to operate the controllable switching element (34, 36) in response to a received control signal, wherein the DC output voltage (42) generated by the switch mode power supply (68) is supplied to the wireless controller (32);
wherein the lighting control (4) is **characterised by**:
a current monitor (66) arranged to measure the leakage current and to generate a feedback signal having a first value when the leakage current is below a predetermined threshold value and a second value when the leakage current is not below the predetermined threshold value, said current monitor (66) being arranged to supply said feedback signal to a feedback input of the switch mode power supply (68);
wherein the switch mode power supply (68) is arranged to enable the leakage current between the mains live input terminal (16) and the mains earth terminal (18) when the feedback signal has its first value, and to disable the leakage current between the mains live input terminal (16) and the mains earth terminal (18) when the feedback signal has its second value.

2. The lighting control (4) as claimed in claim 1, wherein the switch mode power supply (68) comprises a flyback converter arranged to run in a discontinuous mode.

3. The lighting control (4) as claimed in claim 1, wherein the switch mode power supply (68) comprises a buck-boost converter, a push-pull converter, or a SEPIC converter.

4. The lighting control (4) as claimed in any preceding claim, wherein a further feedback signal dependent on an output voltage (42) of the switch mode power supply (68) is provided to the feedback input.

5. The lighting control (4) as claimed in any preceding claim, wherein the current monitor (66) comprises:
a first conductor rail (70) connected to a ground output (GND) of the switch mode power supply (68);
a second conductor rail (72) connected to the mains earth terminal (18);
a shunt resistor (R11) connected between the first and second conductor rails (70, 72);
a potential divider comprising first and second potential divider resistors (R9, R10) connected between the first and second conductor rails (70, 72), wherein a node (74) is provided between the first and second potential divider resistors (R9, R10);
a reference diode (U4) having an anode thereof connected to the second conductor rail (72), and a cathode thereof connected to the first conductor rail (70), said reference diode further comprising a control terminal thereof connected to the node (74) of the potential divider, wherein a breakdown voltage of the reference diode (U4) depends on a voltage at the node (74);
wherein a voltage at the cathode of the reference diode (U4) is used to generate the feedback signal.

6. The lighting control (4) as claimed in claim 5, comprising a coupler (U5) arranged between an output of the current monitor (66) and the feedback input of the switch mode power supply (68),
optionally wherein the coupler (U5) comprises an optocoupler (U5) including an LED (76) and a phototransistor, the optocoupler (U5) being arranged such that:
an anode of the LED (76) is connected to the first conductor rail (70);
a cathode of the LED (76) is connected to the cathode of the reference diode (U4);
a drain terminal of the phototransistor (78) is connected to a supply rail; and a source terminal of the phototransistor (78) is connected to the feedback input of the switch mode power supply (68).

7. The lighting control (4) as claimed in any preceding claim, comprising a rectifier (62) connected between the mains live input terminal (16) and the mains earth terminal (18) and the switch mode power supply (68), optionally wherein the rectifier (62) comprises a full-wave bridge rectifier (D1).

8. The lighting control (4) as claimed in any preceding claim, comprising a protection circuit (60) including a fusible resistor (F1).

9. The lighting control (4) as claimed in any preceding claim, comprising a filter circuit (64) arranged selectively to substantially allow only signals having a frequency within a predetermined passband to pass through said filter, and to substantially attenuate signals having frequencies outside of said passband.

10. The lighting control (4) as claimed in any preceding claim, comprising a plurality of mains live output terminals (22, 24) each arranged to supply the AC input voltage (6) to a respective external lighting load (8, 10);
optionally comprising a plurality of controllable switching elements (34, 36), each arranged between the mains live input terminal (16) and a respective one of the plurality of mains live output terminals (22, 24), wherein each switching element (34, 36) is operable in a respective on state in which a connection path between the mains live input terminal (16) and the respective one of the plurality of mains live output terminals (22, 24) is enabled, and an off state in which said connection path is disabled.

11. The lighting control (4) as claimed in any preceding claim, wherein the controllable switching element (34, 36) comprises a transistor (34, 36), and optionally comprises a metal-oxide-semiconductor field-effect-transistor (34, 36), and/or optionally, wherein the controllable switching element further comprises a metal-oxide-semiconductor field-effect-transistor driver (38, 40).

12. The lighting control (4) as claimed in any preceding claim, comprising a zero crossing detector (28) arranged to supply a detection signal indicative of when a magnitude of the AC input voltage (6) crosses a zero level, optionally wherein the wireless controller uses the detection signal to drive the controllable switching element(s) (34, 36) in synchrony with the zero crossings of the AC input voltage (6).

13. The lighting control (4) as claimed in any preceding claim, wherein the wireless controller (32) comprises a WI-FI transceiver (32).

14. The lighting control (4) as claimed in any preceding claim, wherein the predetermined threshold is equal to or less than 10 mA, optionally equal to or less than 5 mA, further optionally equal to or less than 3.5 mA, optionally wherein the predetermined threshold is 3.5 mA.

15. A method of operating a lighting control (4) to selectively supply an AC input voltage to an external lighting load, the lighting control comprising:
a controllable switching element (34, 36) arranged between a mains live input terminal (16) and a mains live output terminal (22, 24), said switching element (34, 36) being operable in an on state in which a connection path between the mains live input terminal (16) and the mains live output terminal (22, 24) is enabled, and an off state in which the connection path is disabled;
wherein the method comprises:
selectively passing a leakage current between the mains live input terminal (16) and the mains earth terminal (18); and
generating a DC output voltage (42) from said leakage current;
wherein the method is **characterised by**:
measuring the leakage current between the mains live input terminal (16) and the mains earth terminal (18) and generating a feedback signal having a first value when the leakage current is below a predetermined threshold value and a second value when the leakage current is not below the predetermined threshold value;
enabling the leakage current between the mains live input terminal (16) and the mains earth terminal (18) when the feedback signal has its first value; and
disabling the leakage current between the mains live input terminal (16) and the mains earth terminal (18) when the feedback signal has its second value.

## Patentansprüche

1. Beleuchtungssteuerung (4) zum selektiven Zuführen einer Eingangswechselspannung (6) zu einer externen Beleuchtungslast (8, 10), wobei die Beleuchtungssteuerung (4) Folgendes umfasst:
ein steuerbares Schaltelement (34, 36), das zwischen einem netzspannungsführenden Eingangsanschluss (16) und einem netzspannungsführenden Ausgangsanschluss (22, 24) angeordnet ist, wobei das steuerbare Schaltelement (34, 36) dazu angeordnet ist, in einem Ein-Zustand, in dem ein Anschlusspfad zwischen dem netzspannungsführenden Eingangsanschluss (16) und dem netzspannungsführenden Ausgangsanschluss (22, 24) aktiviert ist, und einem Aus-Zustand, in dem der Anschlusspfad deaktiviert ist, zu arbeiten;
eine Schaltmodusleistungszufuhr (68), die zwischen dem netzspannungsführenden Eingangsanschluss (16) und einem Netzmasseanschluss (18) angeschlossen ist, wobei die Schaltmodusleistungszufuhr (68) dazu angeordnet ist, selektiv einen Kriechstrom zwischen dem netzspannungsführenden Eingangsanschluss (16) und dem Netzmasseanschluss (18) durchzuleiten, um eine Ausgangsgleichspannung (42) zu erzeugen; und
eine drahtlose Steuereinheit (32), die dazu angeordnet ist, das steuerbare Schaltelement (34, 36) in Reaktion auf ein empfangenes Steuersignal zu betreiben, wobei die Ausgangsgleichspannung (42), die von der Schaltmodusleistungszufuhr (68) erzeugt wird, der drahtlosen Steuereinheit (32) zugeführt wird;
wobei die Beleuchtungssteuerung (4) durch Folgendes gekennzeichnet ist:
einen Strommonitor (66), der dazu angeordnet ist, den Kriechstrom zu messen und ein Rückkopplungssignal zu erzeugen, das einen ersten Wert aufweist, wenn der Kriechstrom unter einem vorgegebenen Schwellenwert liegt, und einen zweiten Wert, wenn der Kriechstrom nicht unter dem vorgegebenen Schwellenwert liegt, wobei der Strommonitor (66) dazu angeordnet ist, das Rückkopplungssignal einem Rückkopplungseingang der Schaltmodusleistungszufuhr (68) zuzuführen;
wobei die Schaltmodusleistungszufuhr (68) dazu angeordnet ist, den Kriechstrom zwischen dem netzspannungsführenden Eingangsanschluss (16) und dem Netzmasseanschluss (18) zu aktivieren, wenn das Rückkopplungssignal seinen ersten Wert aufweist, und den Kriechstrom zwischen dem netzspannungsführenden Eingangsanschluss (16) und dem Netzmasseanschluss (18) zu deaktivieren, wenn das Rückkopplungssignal seinen zweiten Wert aufweist.

2. Beleuchtungssteuerung (4) nach Anspruch 1, wobei die Schaltmodusleistungszufuhr (68) einen Sperrwandler umfasst, der dazu angeordnet ist, in einem diskontinuierlichen Modus zu laufen.

3. Beleuchtungssteuerung (4) nach Anspruch 1, wobei die Schaltmodusleistungszufuhr (68) einen Abwärts-Aufwärtswandler, einen Gegentaktwandler oder einen SEPIC-Wandler umfasst.

4. Beleuchtungssteuerung (4) nach einem vorstehenden Anspruch, wobei ein weiteres Rückkopplungssignal abhängig von einer Ausgangsspannung (42) der Schaltmodusleistungszufuhr (68) an den Rückkopplungseingang bereitgestellt wird.

5. Beleuchtungssteuerung (4) nach einem vorstehenden Anspruch, wobei der Strommonitor (66) Folgendes umfasst:
eine erste Leiterschiene (70), die an einen Erdungsausgang (GND) der Schaltmodusleistungszufuhr (68) angeschlossen ist;
eine zweite Leiterschiene (72), die an den Netzmasseanschluss (18) angeschlossen ist;
einen Nebenschlusswiderstand (R11), der zwischen der ersten und der zweiten Leiterschiene (70, 72) angeschlossen ist;
einen Spannungsteiler, der erste und zweite Spannungsteilerwiderstände (R9, R10) umfasst, die zwischen der ersten und der zweiten Leiterschiene (70, 72) angeschlossen sind, wobei ein Knoten (74) zwischen dem ersten und dem zweiten Spannungsteilerwiderstand (R9, R10) bereitgestellt ist;
eine Referenzdiode (U4), die eine Anode davon an die zweite Leiterschiene (72) angeschlossen und eine Kathode davon an die erste Leiterschiene (70) angeschlossen aufweist, wobei die Referenzdiode weiter einen Steuerungsanschluss davon an den Knoten (74) des Spannungsteilers angeschlossen umfasst, wobei eine Abbruchspannung der Referenzdiode (U4) von einer Spannung bei dem Knoten (74) abhängt;
wobei eine Spannung bei der Kathode der Referenzdiode (U4) verwendet wird, um das Rückkopplungssignal zu erzeugen.

6. Beleuchtungssteuerung (4) nach Anspruch 5, die einen Koppler (U5) umfasst, der zwischen einem Ausgang des Strommonitors (66) und dem Rückkopplungseingang der Schaltmodusleistungszufuhr (68) angeordnet ist,
wobei optional der Koppler (U5) einen Optokoppler (U5) umfasst, der eine LED (76) und einen Phototransistor beinhaltet, wobei der Optokoppler (U5) so angeordnet ist, dass:
eine Anode der LED (76) an die erste Leiterschiene (70) angeschlossen ist;
eine Kathode der LED (76) an die Kathode der Referenzdiode (U4) angeschlossen ist;
ein Drain-Anschluss des Phototransistors (78) an eine Zufuhrschiene angeschlossen ist; und
ein Source-Anschluss des Phototransistors (78) an den Rückkopplungseingang der Schaltmodusleistungszufuhr (68) angeschlossen ist.

7. Beleuchtungssteuerung (4) nach einem vorstehenden Anspruch, der einen Gleichrichter (62) umfasst, der zwischen dem netzspannungsführenden Eingangsanschluss (16) und dem Netzmasseanschluss (18) und der Schaltmodusleistungszufuhr (68) angeschlossen ist, wobei optional der Gleichrichter (62) eine Graetz-Schaltung (D1) umfasst.

8. Beleuchtungssteuerung (4) nach einem vorstehenden Anspruch, die eine Schutzschaltung (60) umfasst, die einen Schmelzwiderstand (F1) beinhaltet.

9. Beleuchtungssteuerung (4) nach einem vorstehenden Anspruch, die eine Filterschaltung (64) umfasst, die selektiv dazu angeordnet ist, im Wesentlichen nur Signale zuzulassen, die eine Frequenz innerhalb eines vorgegebenen Passbands aufweisen, durch das Filter zu gehen, und im Wesentlichen Signale abzuschwächen, die Frequenzen außerhalb des Passbands aufweisen.

10. Beleuchtungssteuerung (4) nach einem vorstehenden Anspruch, die eine Vielzahl von netzspannungsführenden Ausgangsanschlüssen (22, 24) umfasst, die jeweils dazu angeordnet sind, die Eingangswechselspannung (6) einer jeweiligen externen Beleuchtungslast (8, 10) zuzuführen;
wobei sie optional eine Vielzahl steuerbarer Schaltelemente (34, 36) umfasst, die jeweils zwischen dem netzspannungsführenden Eingangsanschluss (16) und einem jeweiligen der Vielzahl von netzspannungsführenden Ausgangsanschlüssen (22, 24) angeordnet sind, wobei jedes Schaltelement (34, 36) in einem jeweiligen Ein-Zustand, in dem ein Anschlusspfad zwischen dem netzspannungsführenden Eingangsanschluss (16) und dem jeweiligen der Vielzahl netzspannungsführender Ausgangsanschlüsse (22, 24) aktiviert ist, und einem Aus-Zustand, in dem der Anschlusspfad deaktiviert ist, betreibbar ist.

11. Beleuchtungssteuerung (4) nach einem vorstehenden Anspruch, wobei das steuerbare Schaltelement (34, 36) einen Transistor (34, 36) umfasst und optional einen Metalloxidhalbleiter-Feldeffekttransistor (34, 36) umfasst und/oder wobei optional das steuerbare Schaltelement weiter einen Metalloxidhalbleiter-Feldeffekttransistortreiber (38, 40) umfasst.

12. Beleuchtungssteuerung (4) nach einem vorstehenden Anspruch, die einen Nulldurchgangsdetektor (28) umfasst, der dazu angeordnet ist, ein Detektionssignal zuzuführen, das angibt, wann eine Magnitude der Eingangswechselspannung (6) durch eine Nullebene geht, wobei optional die drahtlose Steuereinheit das Detektionssignal verwendet, um das (die) steuerbare(n) Schaltelement(e) (34, 36) synchron mit den Nulldurchgängen der Eingangswechselspannung (6) anzutreiben.

13. Beleuchtungssteuerung (4) nach einem vorstehenden Anspruch, wobei die drahtlose Steuereinheit (32) einen Wi-Fi-Sendeempfänger (32) umfasst.

14. Beleuchtungssteuerung (4) nach einem vorstehenden Anspruch, wobei die vorgegebene Schwelle gleich oder kleiner als 10 mA ist, optional gleich oder kleiner als 5 mA ist, weiter optional gleich oder kleiner als 3,5 mA ist, wobei optional die vorgegebene Schwelle 3,5 mA ist.

15. Verfahren zum Betreiben einer Beleuchtungssteuerung (4) zum selektiven Zuführen einer Eingangswechselspannung zu einer externen Beleuchtungslast, wobei die Beleuchtungssteuerung Folgendes umfasst:
ein steuerbares Schaltelement (34, 36), das zwischen einem netzspannungsführenden Eingangsanschluss (16) und einem netzspannungsführenden Ausgangsanschluss (22, 24) angeordnet ist, wobei das Schaltelement (34, 36) in einem Ein-Zustand, in dem ein Anschlusspfad zwischen dem netzspannungsführenden Eingangsanschluss (16) und dem netzspannungsführenden Ausgangsanschluss (22, 24) aktiviert ist, und einem Aus-Zustand, in dem der Anschlusspfad deaktiviert ist, betreibbar ist;
wobei das Verfahren Folgendes umfasst:
selektives Durchleiten eines Kriechstroms zwischen dem netzspannungsführenden Eingangsanschluss (16) und dem Netzmasseanschluss (18); und
Erzeugen einer Ausgangsgleichspannung (42) aus dem Kriechstrom;
wobei das Verfahren **gekennzeichnet ist durch**:
Messen des Kriechstroms zwischen dem netzspannungsführenden Eingangsanschluss (16) und dem Netzmasseanschluss (18) und Erzeugen eines Rückkopplungssignals, das einen ersten Wert, wenn der Kriechstrom unter einem vorgegebenen Schwellenwert liegt, und einem zweiten Wert, wenn der Kriechstrom nicht unter dem vorgegebenen Schwellenwert liegt, aufweist;
Aktivieren des Kriechstroms zwischen dem netzspannungsführenden Eingangsanschluss (16) und dem Netzmasseanschluss (18), wenn das Rückkopplungssignal seinen ersten Wert aufweist; und
Deaktivieren des Kriechstroms zwischen dem netzspannungsführenden Eingangsanschluss (16) und dem Netzmasseanschluss (18), wenn das Rückkopplungssignal seinen zweiten Wert aufweist.

## Revendications

1. Commande d'éclairage (4) pour alimenter sélectivement en tension d'entrée CA (6) une charge d'éclairage externe (8, 10), ladite commande d'éclairage (4) comprenant :
un élément de commutation commandable (34, 36) agencé entre une borne d'entrée secteur sous tension (16) et une borne de sortie secteur sous tension (22, 24), ledit élément de commutation commandable (34, 36) étant agencé pour fonctionner dans un état conducteur dans lequel un trajet de connexion entre la borne d'entrée secteur sous tension (16) et la borne de sortie secteur sous tension (22, 24) est activé, et un état non conducteur dans lequel le trajet de connexion est désactivé ;
une alimentation électrique à mode de commutation (68) montée entre la borne d'entrée secteur sous tension (16) et une borne de terre secteur (18), ladite alimentation électrique à mode de commutation (68) étant agencée pour faire circuler sélectivement un courant de fuite entre la borne d'entrée secteur sous tension (16) et la borne de terre secteur (18) pour générer une tension de sortie CC (42) ; et
un dispositif de commande sans fil (32) agencé pour actionner l'élément de commutation commandable (34, 36) en réponse à un signal de commande reçu, dans laquelle la tension de sortie CC (42) générée par l'alimentation électrique à mode de commutation (68) est fournie au dispositif de commande sans fil (32) ;
dans laquelle la commande d'éclairage (4) est **caractérisée par** :
un dispositif de surveillance de courant (66) agencé pour mesurer le courant de fuite et pour générer un signal de retour présentant une première valeur lorsque le courant de fuite est au-dessous d'une valeur seuil prédéterminée et une seconde valeur lorsque le courant de fuite n'est pas au-dessous de la valeur seuil prédéterminée, ledit dispositif de surveillance de courant (66) étant agencé pour fournir ledit signal de retour à une entrée de retour de l'alimentation électrique à mode de commutation (68) ;
dans laquelle l'alimentation électrique à mode de commutation (68) est agencée pour activer le courant de fuite entre la borne d'entrée secteur sous tension (16) et la borne de terre secteur (18) lorsque le signal de retour présente sa première valeur, et pour désactiver le courant de fuite entre la borne d'entrée secteur sous tension (16) et la borne de terre secteur (18) lorsque le signal de retour présente sa seconde valeur.

2. Commande d'éclairage (4) selon la revendication 1, dans laquelle l'alimentation électrique à mode de commutation (68) comprend un convertisseur indirect agencé pour fonctionner dans un mode discontinu.

3. Commande d'éclairage (4) selon la revendication 1, dans laquelle l'alimentation électrique à mode de commutation (68) comprend un convertisseur abaisseur-élévateur, un convertisseur symétrique, ou un convertisseur SEPIC.

4. Commande d'éclairage (4) selon une quelconque revendication précédente, dans laquelle un autre signal de retour dépend d'une tension de sortie (42) de l'alimentation électrique à mode de commutation (68) est fourni à l'entrée de retour.

5. Commande d'éclairage (4) selon une quelconque revendication précédente, dans laquelle le dispositif de surveillance de courant (66) comprend :
une première barre conductrice (70) connectée à une sortie de mise à la masse (GND) de l'alimentation électrique à mode de commutation (68) ;
une seconde barre conductrice (72) connectée à la borne de terre secteur (18) ;
une résistance de shunt (R11) montée entre les première et seconde barres conductrices (70, 72) ;
un diviseur de tension comprenant des première et seconde résistances de diviseur de tension (R9, R10) montées entre les première et seconde barres conductrices (70, 72), dans laquelle un noeud (74) est fourni entre les première et seconde résistances de diviseur de tension (R9, R10) ;
une diode de référence (U4) présentant une anode de celle-ci connectée à la seconde barre conductrice (72), et une cathode de celle-ci connectée à la première barre conductrice (70), ladite diode de référence comprenant en outre une borne de commande de celle-ci connectée au noeud (74) du diviseur de tension, dans laquelle une tension de coupure de la diode de référence (U4) dépend d'une tension au noeud (74) ;
dans laquelle une tension à la cathode de la diode de référence (U4) est utilisée pour générer le signal de retour.

6. Commande d'éclairage (4) selon la revendication 5, comprenant un coupleur (U5) agencé entre une sortie du dispositif de surveillance de courant (66) et l'entrée de retour de l'alimentation électrique à mode de commutation (68),
éventuellement dans laquelle le coupleur (U5) comprend un photocoupleur (U5) incluant une DEL (76) et un phototransistor, le photocoupleur (U5) étant agencé de sorte que :
une anode de la DEL (76) soit connectée à la première barre conductrice (70) ;
une cathode de la DEL (76) soit connectée à la cathode de la diode de référence (U4) ;
une borne de drain du phototransistor (78) soit connectée à une barre d'alimentation ; et
une borne source du phototransistor (78) soit connectée à l'entrée de retour de l'alimentation électrique à mode de commutation (68).

7. Commande d'éclairage (4) selon une quelconque revendication précédente, comprenant un redresseur (62) monté entre la borne d'entrée secteur sous tension (16) et la borne de terre secteur (18) et l'alimentation électrique à mode de commutation (68), éventuellement dans laquelle le redresseur (62) comprend un redresseur en pont à double alternance (D1).

8. Commande d'éclairage (4) selon une quelconque revendication précédente, comprenant un circuit de protection (60) incluant une résistance fusible (F1).

9. Commande d'éclairage (4) selon une quelconque revendication précédente, comprenant un circuit de filtrage (64) agencé sélectivement pour sensiblement ne permettre qu'à des signaux présentant une fréquence dans une bande passante prédéterminée de passer à travers ledit filtre, et pour sensiblement atténuer des signaux présentant des fréquences en dehors de ladite bande passante.

10. Commande d'éclairage (4) selon une quelconque revendication précédente, comprenant une pluralité de bornes de sortie sous tension raccordées au réseau (22, 24) chacune agencée pour alimenter en tension d'entrée CA (6) une charge d'éclairage externe (8, 10) respective ;
comprenant éventuellement une pluralité d'éléments de commutation commandables (34, 36), chacun agencé entre la borne d'entrée secteur sous tension (16) et une respective de la pluralité de bornes de sortie secteur sous tension (22, 24), dans laquelle chaque élément de commutation commandable (34, 36) peut fonctionner dans un état conducteur respectif dans lequel un trajet de connexion entre la borne d'entrée secteur sous tension (16) et la respective de la pluralité de bornes de sortie secteur sous tension (22, 24) est activé, et un état non conducteur dans lequel ledit trajet de connexion est désactivé.

11. Commande d'éclairage (4) selon une quelconque revendication précédente, dans laquelle l'élément de commutation commandable (34, 36) comprend un transistor (34, 36), et comprend éventuellement un transistor à effet de champ métal-oxyde-semi-conducteur (34, 36), et/ou éventuellement, dans laquelle l'élément de commutation commandable comprend en outre un circuit d'attaque de transistor à effet de champ métal-oxyde-semi-conducteur (38, 40).

12. Commande d'éclairage (4) selon une quelconque revendication précédente, comprenant un détecteur de passage par zéro (28) agencé pour fournir un signal de détection indiquant le moment où une amplitude de la tension d'entrée CA (6) passe par un niveau zéro, éventuellement dans laquelle le dispositif de commande sans fil utilise le signal de détection pour exciter le ou les éléments de commutation commandables (34, 36) de manière synchronisée avec les passages par zéro de la tension d'entrée CA (6).

13. Commande d'éclairage (4) selon une quelconque revendication précédente, dans laquelle le dispositif de commande sans fil (32) comprend un émetteur-récepteur Wi-Fi (32).

14. Commande d'éclairage (4) selon une quelconque revendication précédente, dans laquelle le seuil prédéterminé est inférieur ou égal à 10 mA, éventuellement inférieur ou égal à 5 mA, en outre éventuellement inférieur ou égal à 3,5 mA, éventuellement dans laquelle le seuil prédéterminé est de 3,5 mA.

15. Procédé de fonctionnement d'une commande d'éclairage (4) pour alimenter sélectivement en tension d'entrée CA une charge d'éclairage externe, ladite commande d'éclairage comprenant :
un élément de commutation commandable (34, 36) agencé entre une borne d'entrée secteur sous tension (16) et une borne de sortie secteur sous tension (22, 24), ledit élément de commutation commandable (34, 36) étant agencé pour fonctionner dans un état conducteur dans lequel un trajet de connexion entre la borne d'entrée secteur sous tension (16) et la borne de sortie secteur sous tension (22, 24) est activé, et un état non conducteur dans lequel le trajet de connexion est désactivé ;
dans lequel le procédé comprend :
la circulation sélective d'un courant de fuite entre la borne d'entrée secteur sous tension (16) et la borne de terre secteur (18) ; et
la génération d'une tension de sortie CC (42) à partir dudit courant de fuite ;
dans lequel le procédé est **caractérisé par** :
la mesure du courant de fuite entre la borne d'entrée secteur sous tension (16) et la borne de terre secteur (18) et la génération d'un signal de retour présentant une première valeur lorsque le courant de fuite est au-dessous d'une valeur seuil prédéterminée et une seconde valeur lorsque le courant de fuite n'est pas au-dessous de la valeur seuil prédéterminée ;
l'activation du courant de fuite entre la borne d'entrée secteur sous tension (16) et la borne de terre secteur (18) lorsque le signal de retour présente sa première valeur ; et la désactivation du courant de fuite entre la borne d'entrée secteur sous tension (16) et la borne de terre secteur (18) lorsque le signal de retour présente sa seconde valeur.
